# EUROPÄISCHE PATENTSCHRIFT

(11) **EP 2 442 086 B1**
(45) Veröffentlichungstag und Bekanntmachung des Hinweises auf die Patenterteilung: **30.12.2015**
(21) Anmeldenummer: 11184976.6
(22) Anmeldetag: 13.10.2011
(51) Int. Cl.: G01M 1/04

(54) **Vorrichtungssystem zur Lagerung eines auszuwuchtenden Rotors in einer Auswuchtmaschine**
System for bearing a rotor to be balanced in a balancing machine
Système de dispositif pour le stockage d'un rotor devant être équilibré dans une machine d'équilibrage

(30) Priorität: 15.10.2010 DE 102010038214
(43) Veröffentlichungstag der Anmeldung: 18.04.2012
(73) Patentinhaber: Schenck RoTec GmbH, 64293 Darmstadt (DE)
(72) Erfinder: Avsar, Enrica, 64291 Darmstadt (DE); Bassmann, Michael, 64291 Darmstadt (DE); Mosch, Ulrich, 64560 Riedstadt (DE); Roth, Wolfgang, 64832 Babenhausen (DE); Weckert, Jürgen, 64560 Riedstadt (DE)
(74) Vertreter: Haar, Lucas Heinz Jörn

(56) Entgegenhaltungen:
- WO-A2-00/77484
- DE-A1- 19 853 579
- DE-U1-202009 014 451
- US-A1- 2003 046 999

## Beschreibung

Die Erfindung betrifft eine Vorrichtungssystem zur Lagerung eines auszuwuchtenden Rotors in einer Auswuchtmaschine, umfassend ein Grundelement mit einer Mittelachse, das dazu ausgebildet ist, um mit einer drehbaren Spindel einer dynamischen Auswuchtmaschine oder einer Aufnahmeachse einer statischen Auswuchtmaschine koaxial verbunden zu werden.

Bei Universalauswuchtmaschinen, die für das Auswuchten von verschiedenen Rotoren bestimmt sind, werden Vorrichtungen benötigt, welche geeignet sind, Rotoren von vielfältiger Beschaffenheit mit der drehbaren Spindel oder der Aufnahmeachse der Auswuchtmaschine zu verbinden. Die Vorrichtung muss in der Lage sein, die auszuwuchtenden Rotoren möglichst präzise in Bezug auf ihre spätere Rotationsachse zu zentrieren. Weiterhin ist für das drehende (dynamische) Auswuchten die Übertragung eines Drehmoments von der Spindel auf den Rotor erforderlich, damit die Drehbewegung der Spindel sicher auf den Rotor übertragen werden kann.

Bei Auswuchtmaschinen für Räder von Fahrzeugen, wie sie in Werkstätten und Im Relfenfachhandel verwendet werden, gibt es einstellbare Aufnahmevorrichtungen für die verschiedenen Radtypen und Größen. Für Universalauswuchtmaschinen, die im industriellen Umfeld oder für den Auswuchtservice verwendet werden, fehlen bisher geeignete Lösungen, da hier nicht eine Rotorart, sondern eine große Zahl von unterschiedlichsten Rotortypen und Rotorformen verarbeitet werden muss.

Eine Vorrichtung der in dem Oberbegriff des Patentanspruchs 1 angegebenen Art ist aus US 2003/0046999 A1 bekannt. Die Vorrichtung dient zur Aufnahme von Fahrzeugrädern in einer Auswuchtmaschine und umfasst eine drehbare Welle, die mit einem Ende mit der Antriebsspindel der Auswuchtmaschine gekuppelt ist und ein mit Gewinde versehenes freies Ende aufweist, das sich durch das Mittelloch des Fahrzeugrades erstreckt. An der Welle ist eine Nabe angebracht, die zur Anlage einer Seite des Fahrzeugrades dient, um dessen Lage in der Auswuchtmaschine festzulegen. Auf der Welle ist weiterhin eine Zentrierhülse angeordnet, die dazu bestimmt ist, in das Mittenloch des Fahrzeugrades einzugreifen und in Bezug auf die Welle zu zentrieren. Die Zentrierhülse ist auf der Welle gegen Federkraft axial beweglich und so befestigt, dass sie auf der Welle verbleibt, wenn ein Fahrzeugrad von der Welle abgenommen wird. Zum Festspannen weist die Vorrichtung einen abnehmbaren Flansch und eine mit Innengewinde versehene Flügelmutter auf, die auf das freie Ende der Welle aufgeschraubt wird. Der Flansch umfasst eine Anzahl von Zentrierbolzen, die in die Schraubenlöcher des Fahrzeugrades eingreifen. Die Anordnung der Vorrichtungsteile ist hierbei festgelegt und nur zum Spannen eines bestimmten Typs von Fahrzeugrad bestimmt. Für eine Aufnahme anderer Rotorformen, insbesondere solcher mit Außenzentrierung, ist die bekannte Vorrichtung nicht geeignet.

Aus DE 20 2009 014 451 U1 ist ein für das Auswuchten von Fahrzeugrädern geeignetes Spannfutter mit zum Spannen radial nach außen bewegte Backen bekannt, die mit sich axial erstreckenden Spannflächen gegen die Innenwand einer zentralen,Bohrung eines Fahrzeugrades spannbar sind. Das Halten des Werkstücks und das übertragbare Drehmoment wird hierbei durch Reibung zwischen der Werkstückbohrung und den Spannflächen der Backen bestimmt. Das Spannfutter ist für verschieden große Bohrungsdurchmesser geeignet, erlaubt aber kein Spannen eines Rotors von außen.

Bei einer aus DE 198 53 579 A1 bekannten Vorrichtung zur Befestigung einer Achsmesseinrichtung an einer Felge eines Rades an einem Kraftfahrzeug befinden sich an einem Grundkörper Mittel zur Befestigung der Achsmesseinrichtung in einer in Bezug auf den Grundkörper vorbestimmten Bezugsrichtung. Die Mittel umfassen drei Stützarme, die sich in einer zur Bezugsrichtung senkrechten Ebene erstrecken, und an den Stützarmen längsverschieblich angeordnete Abstandshalter, deren Ende zur Dreipunktanlage an einer Felge dienen. Außerdem sind Mittel zur Halterung des Grundkörpers an der Felge vorgesehen. Die Lage der Abstandshalter kann an unterschiedliche Teilungen von Radbefestigungsmuttern angepasst werden.

Es ist weiterhin aus WO 2000/77484 A2 eine Spannvorrichtung zur Aufspannung eines Motorradrades auf die Welle einer Auswuchtmaschine bekannt, mit einem an der Welle befestigbaren und zu dieser im befestigten Zustand koaxialen Aufspannzapfen und mit einer Spanneinrichtung, die einen mehrschenkeligen, quer zum Aufspannzapfen angeordneten Arm aufweist, an dessen Enden jeweils ein Einspannmittel zur Anlage gegen das Rad und zur trelbschlüssigen Mitnahme des Rades vorgesehen ist. Zur Anpassung an unterschiedliche Raddurchmesser ist der Arm in radialer Richtung verstellbar ausgebildet. Die Vorrichtung ist für Motorradräder bestimmt und nicht zur Anpassung an eine große Vielfalt von Rotoren geeignet.

Eine andere aus DE 10 2007 030 916 B3 bekannte Vorrichtung zur Aufnahme eines auszuwuchtenden Werkstücks in einer Auswuchtmaschine weist einen axial bewegbaren Spannkonus und eine den Spannkonus umgreifende, geschlitzte Spannhülse auf, durch die das auszuwuchtende Werkstück in einer zentralen Bohrung gespannt werden kann. Die Anwendung dieser Vorrichtung ist jeweils auf einen eng begrenzten Bereich von Bohrungsdurchmessern beschränkt.

Eine Auswuchtmaschine für Fahrzeugräder, bei der die Fahrzeugräder mit einem Spanndeckel auf einen Wuchtkopf gespannt werden, ist aus DE 36 41 295 A1 bekannt. Zur Zentrierung des auszuwuchtenden Fahrzeugrades ist ein Spanndorn mit mehreren ringförmig angeordneten Spannsegmenten vorgesehen, der in eine radseitige Zentrierbohrung eingreift und durch Einpressen eines Spreizkonus aufgeweitet werden kann.

Die bekannten Vorrichtungen, wie Dreibackenfutter, Kegel- oder Gleitbüchsendorne, haben den Nachteil, dass sie nur für einen begrenzten Bereich von Spanndurchmessern und teilweise nur für einen bestimmten Zentrierdurchmesser geeignet sind und Beschränkungen hinsichtlich der Bauform der Rotoren haben. Das Gewicht der bekannten Vorrichtungen ist vergleichsweise hoch. Dies schränkt den verfügbaren Bereich der zulässigen Belastung der Maschinenspindel durch die Rotormasse ein und beschränkt dadurch auch die Einsatzmöglichkelten der Auswuchtmaschine.

Der Erfindung liegt die Aufgabe zugrunde, ein Vorrichtungssystem zur Lagerung eines auszuwuchtenden Rotors in einer Auswuchtmaschine zu schaffen, das an eine große Vielfalt von Rotoren angepasst werden kann und eine genaue Zentrierung der verschiedenen Rotoren über einen extrem weiten Durchmesserbereich ermöglicht.

Erfindungsgemäß wird diese Aufgabe durch eine Vorrichtungssystem mit den in Patentanspruch 1 angegebenen Merkmalen gelöst. Vorteilhafte Ausgestaltungen des Vorrichtungssystems sind in den Ansprüchen 2 bis 16 angegeben.

Das Vorrichtungssystem zur Lagerung eines auszuwuchtenden Rotors umfasst nach der Erfindung folgende in Bezug auf eine Mittelachse rotationssymmetrisch ausgebildete, mit Anschlussenden Vorrichtungsteile, nämlich ein Grundelement mit einer Mittelachse, das dazu ausgebildet ist, um mit einer drehbaren Spindel einer dynamischen Auswuchtmaschine oder einer Aufnahmeachse einer statischen Auswuchtmaschine koaxial verbunden zu werden, ein Zentrierelement für die Innenzentrierung eines auszuwuchtenden Rotors, ein Distanzelement zur axialen Positionierung des Zentrierelements, einen Auflageteller und einen Spanndeckel, wobei die Anschlussenden der Vorrichtungsteile Zentrier- und Verbindungsmitteln aufweisen, durch die die Vorrichtungsteile zueinander zentriert und in verschiedenen Anordnungen zueinander drehfest aneinander befestigt werden können.

Das erfindungsgemäße Vorrichtungssystem ist durch eine Reihe von Kombinationsmöglichkeiten seiner Vorrichtungsteile in der Lage an einer Vielzahl verschiedener Rotorformen und Rotorgrößen angepasst zu werden. In jeder möglichen Kombination der Vorrichtungsteile werden diese exakt zueinander zentriert und so miteinander verbunden, dass hohe Drehmomente übertragen werden können. Die Vorrichtungsteile sind einfach und kostengünstig herstellbar und ermöglichen die Bildung von Rotoraufnahmen von vergleichsweise geringer Masse. Die auszuwuchtenden Rotoren können mit großer Genauigkeit in Bezug auf die Maschinenachse zentriert und für das dynamische Auswuchten sicher und drehfest gespannt werden.

Das Grundelement ist vorzugsweise eine ebene, kreisförmige Scheibe, die in rotationssymmetrischer Anordnung Befestigungsbohrungen zur Aufnahme von Befestigungsschrauben aufweist.

Nach einer weiteren Ausgestaltung der Erfindung können die Vorrichtungsteile parallel zur Mittelachse und im gleichen Abstand von dieser und voneinander angeordnete Bohrungen haben, die als Durchgangsbohrungen und/oder als Gewindebohrungen ausgebildet und zur Aufnahme von Verbindungsschrauben bestimmt sind. Diese Gestaltung der drehfesten Verbindung ist einfach zu montieren und eignet sich zur Übertragung hoher Drehmomente.

Zur Erzielung einer größeren Variationsbreite kann das Vorrichtungssystem nach der Erfindung mehrere Zentrierelemente von verschiedenem Zentrierdurchmesser und mehrere Distanzelemente von verschiedener Länge beinhalten. Selbstverständlich kann das Vorrichtungssystem nicht für jeden Zentrierdurchmesser ein passendes Zentrierelement enthalten. Die Zentrierelemente können daher nach der Erfindung aus einem Material bestehen, das spanabhebend bearbeitbar ist. Hierdurch können der Zentrierdurchmesser und die axiale Länge der Zentrierelemente an den jeweiligen Anwendungsfall angepasst werden. Auch der Auflageteller kann vorteilhaft aus spanabhebend bearbeitbarem Material bestehen, damit er zu Zentrierzwecken genutzt werden kann. So kann beispielsweise der Auflageteller auf einer Seite mit einer Ausnehmung oder Einsenkung versehen werden, die einen zur Innenzentrierung geeigneten, hohlzylindrischen Rand aufweist.

Die Distanzelemente können nach der Erfindung jeweils ein zylindrisches Mittelstück und an den Anschlussenden jeweils einen Flansch aufweisen, wobei der eine Flansch mit Durchgangsbohrungen und der andere Flansch in gleicher Zahl und Anordnung mit Gewindebohrungen versehen ist. Das Verbinden mehrerer Distanzelemente ist daher mittels Verbindungsschrauben auf einfache Weise möglich. Der Spanndeckel kann nach der Erfindung eine zentrale Befestigungsbohrung und eine zugeordnete Spannschraube aufweisen, wobei das Grundelement, das Zentrierelement, das Distanzelement und/oder der Auflageteller mit einer zentralen Gewindebohrung zur Aufnahme der Spannschraube versehen sind.

In weiterer Ausgestaltung der Erfindung umfasst das Vorrichtungssystem eine Vorrichtung zur Innen- und/oder Außenzentrierung eines auszuwuchtenden Rotors. Die Innen- und/oder Außenzentrierung erfolgt hierbei vorteilhaft mittels verstellbarer Zentrierstücke, die an dem Grundelement angeordnet sind. In einer bevorzugten Ausgestaltung weist die Vorrichtung zur Innen- und/oder Außenzentrierung mehrere Auflageschienen auf, die an dem Grundelement befestigt sind, sich im wesentlichen radial zur Mittelachse des Grundelements erstrecken und in einer gemeinsamen Radialebene liegende Auflageflächen haben, wobei an jeder Auflageschiene ein Zentrierstück für eine Innen- und/oder Außenzentrierung des Rotors angeordnet ist, das gegenüber der Auflageschiene radial verstellbar und in einer beliebigen Zentrierstellung mit der Auflageschiene fest verbindbar ist.

Durch die Einstellbarkeit der Zentrierstücke kann die Vorrichtung zur Innenund/oder Außenzentrierung einfach und schnell an die Abmessungen und die Formgestalt einer großen Anzahl unterschiedlichster Rotortypen angepasst werden. Die Einstellung der wenigstens drei Zentrierstücke kann einzeln vorgenommen werden, wodurch ein sehr genaues Zentrieren des jeweiligen Rotors in Bezug auf seine Rotationsachse möglich ist. Die erreichbare Zentriergenauigkeit ist höher als die üblicher Dreibackfutter und erreicht nahezu die Genauigkeit von spielfrei spannenden Aufnahmen, wie z.B. Kegelbüchsendornen. Die erfindungsgemäße Vorrichtung ist außerdem kostengünstig herstellbar und zeichnet sich durch ein geringes Gewicht aus, letzteres ist für die Genauigkeit der Unwuchtmessung besonders vorteilhaft und erhöht die nutzbare Belastbarkeit der Maschinenspindel.

Für das dynamische Auswuchten ist nach einem weiteren Vorschlag der Erfindung zur sicheren Übertragung eines Drehmoments auf den auszuwuchtenden Rotor an wenigstens einer Auflageschiene ein Spannstück angeordnet, das radial verstellbar und innerhalb seines Verstellbereiches in einer beliebigen Ubertragungsstellung mit der Auflageschiene fest verbindbar ist. Durch die Verstellbarkeit des Spannstücks kann die Drehmomentübertragung an viele verschiedene Lagen von Übertragungsstellen angepasst werden, die bei verschiedenen Rotortypen und Rotorgrößen vorliegen können. Das Spannstück kann mit verschiedenen Mitnehmerbolzen oder Spannschrauben versehen werden, die zur formschlüssigen Drehmomentübertragung in Hinterschnitte oder Bohrungen des jeweils auszuwuchtenden Rotors eingreifen. Um sowohl eine Innenzentrierung als auch eine Außenzentrierung von auszuwuchtenden Rotoren zu ermöglichen, ist nach einem weiteren Vorschlag der Erfindung das Zentrierstück mit einer radial inneren und einer radial äußeren Anlagefläche versehen.

Vorzugsweise kann die äußere, aber auch die innere Zentrierfläche eine konvex gekrümmte Anlagefläche aufweisen, deren Krümmungsachse parallel zur Mittelachse des Grundelements ausgerichtet ist. Durch die gekrümmte Anlagefläche wird eine Linienberührung erzielt und die Gefahr einer Beeinträchtigung der Zentriergenauigkeit durch Einflüsse der Zentrierfläche des Rotors vermieden.

Nach einem weiteren Vorschlag der Erfindung weist die Auflageschiene in der Auflagefläche eine radial verlaufende erste Längsnut auf, in welche das Zentrierstück mit einem als Nutenstein ausgebildeten ersten Abschnitt eingreift, und aus der das Zentrierstück mit einem zweiten Abschnitt herausragt. Auf diese Weise kann das Zentrierstück in der Längsnut geführt und gegen Verdrehen gesichert werden, so dass eine einzige Spannschraube genügt, um das Zentrierstück in der jeweiligen Zentrierstellung an der Auflageschiene zu fixieren.

Das Spannstück kann nach der Erfindung ein in der ersten Längsnut der Auflageschiene angeordneter Nutenstein sein, der nicht aus der ersten Längsnut herausragt und daher das Auflegen eines Rotors auf die Auflageschiene nicht behindert. Die Auflageschiene kann weiterhin auf der der Auflagefläche entgegengesetzten Seite eine zur ersten Längsnut parallele zweite Längsnut und einen die erste und die zweite Längsnut miteinander verbindenden Längsschlitz aufweisen, wobei in der zweiten Längsnut wenigstens ein Nutenstein angeordnet ist, der durch eine den Längsschlitz durchdringende Schraube mit dem Zentrierstück und/oder dem Spannstück verbunden ist. Diese Gestaltung ist einfach und kostengünstig herstellbar und ermöglich eine stufenlose Positionierung von Zentrierstück und/oder Spannstück in radialer Richtung. Das Zentrierstück kann zwei parallele Befestigungsbohrungen zur alternativen Aufnahme einer Spannschraube aufweisen, damit bei unterbrochenem Längsschlitz in jeder Zentrierposition eine Befestigungsmöglichkeit gegeben ist.

Nach einem weiteren Vorschlag der Erfindung können die radial inneren Enden der Auflageschienen in einem Abstand von der Mittelachse des Grundelements angeordnet sein, wobei das Grundelement in der Mitte zwischen den inneren Enden der Auflageschienen Haltemittel zur Befestigung eines weiteren Elements, beispielsweise eines Spanndeckels, aufweist. Diese Gestaltung ermöglich das Festspannen eines Rotors mit einem zusätzlichen Spanndeckel und die Erweiterung der Vorrichtung durch Anbringung von zusätzlichen Auflage-, Zentrier-oder Stützelementen, um hierdurch die Anwendungsbreite der Vorrichtung noch weiter zu vergrößern.

Ein bevorzugtes Ausführungsbeispiel der Erfindung ist in der Zeichnung dargestellt und wird im Folgenden näher beschrieben. Es zeigen
- Figur 1: das Vorrichtungssystem in einer ersten Zusammenstellung in zusammengesetztem Zustand,
- Figur 2: eine Anordnung von Vorrichtungsteilen für eine Innenzentrierung mit Zentrierelement und Spannung mit Spanndeckel,
- Figur 3: eine Anordnung von Vorrichtungsteilen für eine Außenzentrierung mit Zentrierelement und Spannung mit Spanndeckel,
- Figur 4: eine Anordnung von Vorrichtungsteilen für eine Zentrierung mit Zentrierelement und Drehmomentübertragung mittels Spannstücken,
- Figur 5: eine Anordnung von Vorrichtungsteilen für eine Innen- oder Außenzentrierung mit verstellbaren Zentrierstücken und Spannstücken.

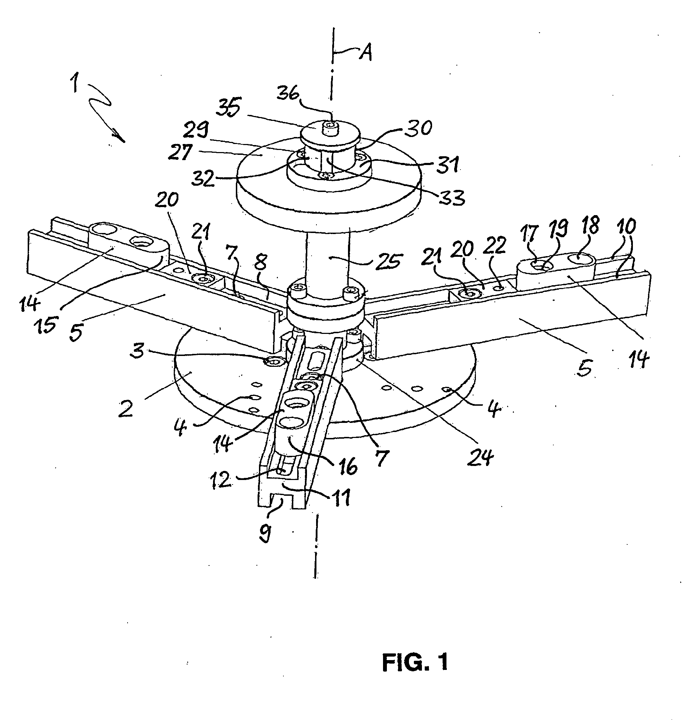

Figur 1 zeigt die einzelnen zusammengebauten Vorrichtungsteile eines Vorrichtungssystems 1 zur Lagerung eines Rotors in einer Universalauswuchtmaschine mit vertikal ausgerichteter Spindel. Das Vorrichtungssystem 1 weist ein Grundelement 2 auf, das die Form einer ebenen, kreisrunden Scheibe hat, die rotationssymmetrisch in Bezug auf eine Mittelachse A ausgebildet ist. Das Grundelement 2 weist eine zentrale Zentrierbohrung und daneben eine Reihe von Befestigungsbohrungen 3, 4 auf. Die Befestigungsbohrungen 3 dienen zur versenkten Aufnahme von Schrauben, mit denen das Grundelement 2 an der Spindel einer Auswuchtmaschine befestigt werden kann. Die Befestigungsbohrungen 4 sind zur Befestigung von Auflageschienen 5 bestimmt. In der Zeichnung sind nur die Befestigungsbohrungen 4 sichtbar, die in Viererteilung angeordnet sind, um damit vier im gleichmäßigen Abstand voneinander angeordnete Auflageschienen 5 befestigen zu können. Die in regelmäßiger Dreierteilung angeordneten Befestigungsbohrungen 4 sind durch die daran mittels Schrauben 7 befestigten, in der Zeichnung dargestellten Auflageschienen 5 verdeckt.

Die Auflageschienen 5 haben eine langgestreckte Form mit ebenen, parallelen Außenflächen, die mit den Flächen eines Quaders zusammenfallen und sich über die gesamte Länge der Auflageschienen 5 erstrecken. Auf zwei einander entgegengesetzten Seiten weisen die Auflageschienen 5 jeweils Längsnuten 8, 9 von rechteckigem Querschnitt auf. Die Auflageschienen 5 sind so an dem Grundelement 2 nur mit ihren inneren Enden befestigt und ragen mit ihren äußeren Enden nach außen über den Umfangsrand des Grundelements 2 hinaus. Die Auflageschienen sind außerdem so befestigt, dass sich die erste Längsnut 8 auf der von dem Grundelement 2 abgekehrten Oberseite und die zweite Längsnut 9 auf der dem Grundelement 2 zugekehrten Unterseite der Auflageschienen 5 befindet. Die auf beiden Seiten an die erste Längsnut 8 angrenzenden ebenen Flächen dienen als Auflageflächen 10 für einen auszuwuchtenden Rotor. Mit den diesen entgegengesetzten zu den Auflageflächen 10 parallelen Flächen liegen die Auflageschienen 5 auf dem Grundelement 2 auf. Die Längsnuten 8, 9 sind durch eine mittlere Wand 11 voneinander getrennt. In der Wand 11 befindet sich ein Längsschlitze 12 oder mehrere, der eine geringere Breite hat, als die Längsnuten 8, 9. Der Längsschlitz 12 ist zum Durchstecken von Schrauben bestimmt.

In der Längsnut 8 der einzelnen Auflageschienen 5 ist jeweils ein Zentrierstück 14 angeordnet. Das Zentrierstück 14 hat die Form einer Passfeder mit rechteckigem Querschnitt und abgerundeten Enden. Die Breite des Zentrierstücks 14 ist an die Breite der Längsnut 8 derart angepasst, dass das Zentrierstück 14 ohne großen Widerstand in der Längsnut verschoben werden kann. Die Enden des Zentrierstücks 14 bilden konvex gekrümmte Anlageflächen 15, 16, deren Krümmungsachsen im Wesentlichen parallel zur Mittelachse A verlaufen. Zur Befestigung an der Auflageschiene 5 ist das Zentrierstück 14 mit zwei gestuften Durchgangsbohrungen 17, 18 versehen. In der Durchgangsbohrung 17 befindet sich eine Spannschraube 19 die durch einen der Längsschlitze 12 hindurchragt und in einen in der Längsnut 9 verschiebbar angeordneten Nutenstein eingeschraubt ist. Durch Anziehen der Spannschraube 19 kann das Zentrierstück 14 in der jeweiligen Zentrierstellung an der Auflageschiene 5 festgespannt werden. Befindet sich bei einer durch den Rotor vorgegebenen Zentrierstellung in der Flucht der Durchgangsbohrung 17 ein den Längsschlitz 12 begrenzender Abschnitt der Wand 11, so kann das Zentrierstück 14 festgespannt werden, indem die Spannschraube 19 in die Durchgangsbohrung 18 eingesetzt und in den entsprechend angeordneten Nutenstein eingeschraubt wird.

In der Längsnut 8 der Auflageschiene 5 ist weiterhin ein nach Art eines Nutensteins ausgebildetes Spannstück 20 angeordnet, das mittels einer einen Längsschlitz 12 durchdringenden Spannschraube 21 und einem in der Längsnut 9 angeordneten Nutenstein an der Auflageschiene 5 festklemmbar ist. Das Spannstück 20 hat ein im Abstand von der Spannschraube 21 angeordnete Befestigungsbohrung 22, die zur Aufnahme eines Mitnehmerstiftes oder einer Schraube dient, mit welcher der Rotor gegen die Auflageschiene 5 gespannt werden kann. Das Spannstück 20 ist ebenfalls in Längsrichtung der Auflageschiene 5 verstellbar und kann bei Bedarf um 180° um die Achse der Spannschraube 21 gedreht in die Längsnut 8 eingesetzt werden, wenn die durch den Rotor vorgegebene Position der Stelle zur Drehmomentübertragung dies erfordert.

In der in der Zeichnung dargestellten Einstellung eignet sich die Vorrichtung 1 zur Außenzentrierung eines Rotors, dessen Zentrierdurchmesser gleich dem doppelten Abstand der Anlageflächen 15 der Zentrierstücke 14 von der Mittelachse A entspricht. Außerdem kann ein Rotor mit Innenzentrierung gelagert werden, wenn der Durchmesser seiner Zentrierbohrung dem doppelten Abstand der Anlageflächen 16 der Zentrierstücke 14 von der Mittelachse A entspricht. Im Falle einer solchen Innenzentrierung kann allerdings die Anordnung der Spannstücke 20 ungeeignet sein, so das diese dann radial außerhalb der Zentrierstücke 14 angeordnet werden müssen. Dies ist insbesondere auch dann notwendig, wenn der für die Innenzentrierung zur Verfügung stehende Durchmesser der Zentrierfläche so klein ist, dass die Zentrierstücke 14 bis zum radialen inneren Ende der Auflageschienen 5 verschoben werden müssen.

Im Zentrum des Grundelements 2 ist ein erstes Distanzelement 24 durch Schrauben lösbar befestigt und gegenüber dem Grundelement 2 exakt zentriert. Anstelle eines Distanzelements kann hier auch ein Zentrierelement oder ein Dorn für das Einmessen der einstellbaren Zentrierstücke befestigt werden.

An dem ersten Distanzelement 24 ist ein zweites Distanzelement 25 größerer Länge mittels Schrauben befestigt. Beide Distanzelemente 24, 25 haben ein zylindrisches Mittelstück und an ihren Anschlussenden Flansche, in denen miteinander fluchtende Durchgangsbohrungen oder Gewindebohrungen zur Aufnahme der Schrauben zu ihrer Befestigung angeordnet sind. Die Distanzelemente 24, 25 haben die Aufgabe, die axiale Lage anderer Vorrichtungsteile, z.B. eines Zentrierelements, eines Auflagetellers und eines Spanndeckels an die jeweiligen vom aufzunehmenden Werkstück bestimmten Anforderungen anzupassen.

Das Distanzelement 25 trägt einen Auflageteller 27, der die Form einer zylindrischen Scheibe hat. Der Auflageteller 27 dient zur Auflage von Rotoren mit größerem Zentrierdurchmesser in Verbindung mit dafür geeigneten zylindrischen Zentrierstücken ohne eigene Auflagefläche für den Rotor. Außerdem kann der Auflageteller als Zentrierstück für die Innenzentrierung bei besonders großen Zentrierdurchmessern oder zur Außenzentrierung bei kleineren Zentrierdurchmessern verwendet werden. Für beide Anwendungsfälle kann der Auflageteller 27 durch spanabhebende Bearbeitung angepasst werden. Für die Außenzentrierung kann die Auflagefläche des Auflagetellers 27 mit einer durch eine zylindrische Hohlfläche begrenzten Ausnehmung versehen sein oder versehen werden.

Auf dem Auflageteller 27 ist ein Zentrierelement 29 angeordnet. Das Zentrierelement 29 hat einen Zentrierabschnitt 30 und einen Flansch 31, der Durchgangsbohrungen für die Aufnahme von Befestigungsschrauben enthält. Der Zentrierabschnitt 30 weist eine zylindrische Zentrierfläche 32 auf, die von Nuten 33 unterbrochen ist, die sich an die Bohrungen im Flansch 31 anschließen, um das Einsetzen der Befestigungsschrauben zu ermöglichen. Die Nuten 33 können außerdem als Passnuten zur Aufnahme einer Passfeder oder eines Keils für die Drehmomentübertragung auf den auszuwuchtenden Rotor ausgebildet sein.

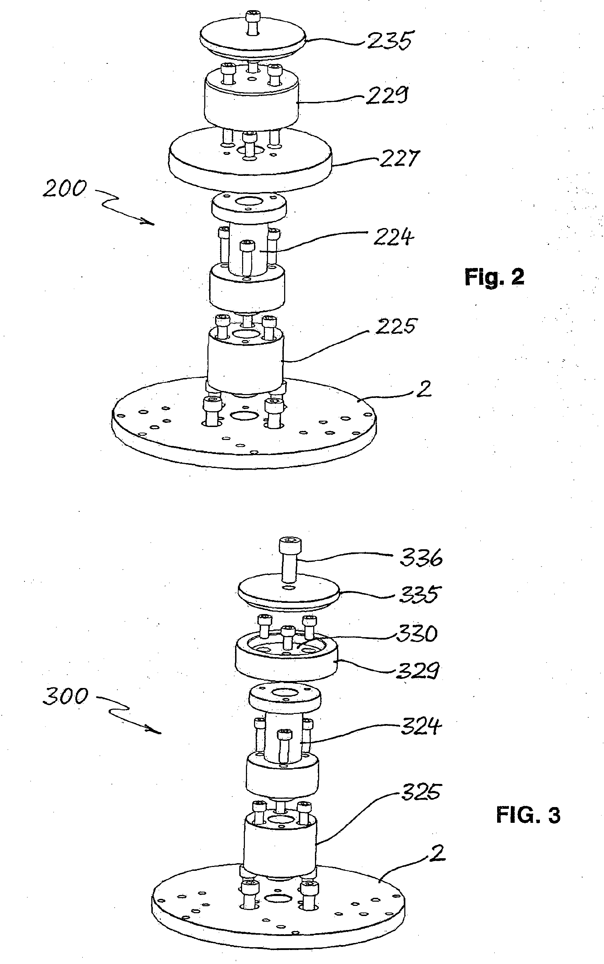

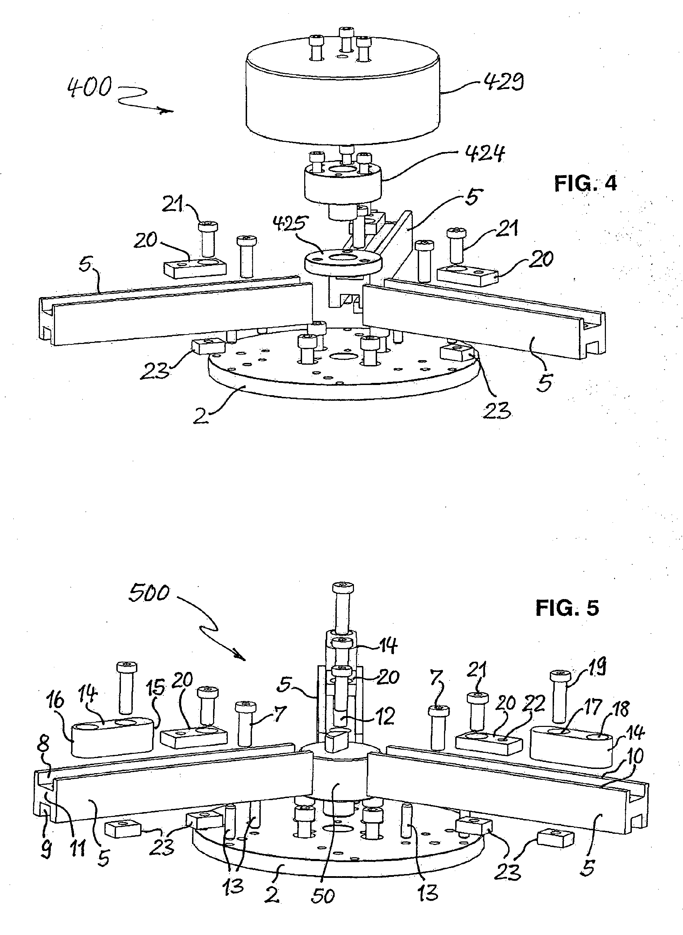

Das in Figur 1 gezeigte Zentrierelement 29 ist eine von vielen möglichen Ausführungsformen, bei der der Zentrierdurchmesser kleiner ist als der Durchmesser, der für die Ausbildung des Flansches 31 mit Durchgangsbohrungen benötigt wird. Ist der Zentrierdurchmesser größer, so kann das Zentrierelement, wie in den Figuren 2 und 4 gezeigt, die Form eines geraden Zylinders haben, wobei die Befestigungsbohrungen vollständig innerhalb des Zylinders liegen.

Auf der dem Auflageteller 27 abgekehrten Seite des Zentrierelements 29 ist ein Spanndeckel 35 angeordnet und mittels einer zentralen Spannschraube 36 befestigt. Die Spannschraube 36 greift in eine zentrale Gewindebohrung ein, die in dem Zentrierelement 29 ausgebildet ist. Gleiche Gewindebohrungen können auch der Auflageteller 27, die Distanzelemente 24, 25 und das Grundelement 2 haben. Der Durchmesser des Spanndeckels 35 ist in der Regel größer als der Zentrierdurchmesser des zu spannenden Rotors und weist einen Zentrierbund zu seiner Zentrierung gegenüber dem zu spannenden Rotor auf. Das Vorrichtungssystem kann vorteilhaft neben einem Sortiment von mehreren Zentrierelementen für die Innenzentrierung, die verschiedene Durchmesser haben, auch ein Sortiment verschieden großer Spanndeckel enthalten.

Alternativ zur Sicherung mit Spanndeckel kann die axiale Fixierung der Rotoren auch mittels Schrauben erfolgen, welche in regelmäßigem Abstand auf einem Teilkreis um die Mittelachse angeordnet sind. Dafür werden in den Auflageteller spanabhebend entsprechende Gewindebohrungen eingebracht. Ein Spanndeckel kann dann entfallen.

Im folgenden werden noch einige Zusammenstellungen von Vorrichtungsteilen des Vorrichtungssystems nach der Erfindung beschrieben, die für verschiedene Anwendungsfälle bestimmt sind.

Figur 2 zeigt eine für die Innenzentrierung bestimmte Anordnung 200, bei der ein Rotor mit Hilfe eines zylindrischen Zentrierelements 229 innen in einer Bohrung zentriert wird. Die axiale Auflage des Rotors bildet ein Auflageteller 227, gegen den der Rotor zur Fixierung und Drehmomentübertragung mit Hilfe eines Spanndeckels 235 gespannt wird. Der Auflageteller 227 wird entweder, wenn der Rotor ausreichend flach ist, unmittelbar an das Grundelement 2 angeschraubt. Erstreckt sich jedoch der Rotor radial außerhalb des Auflagetellers 227 über dessen Unterseite hinaus, so kann man, wie in Figur 2 gezeigt, zwischen dem Grundelement 2 und dem Auflageteller 227 ein Distanzelement 224 oder mehrere Distanzelemente 224, 225 angeordnen.

Figur 3 zeigt eine Anordnung 300 von Vorrichtungsteilen für eine Außerzentrierung eines Rotors bei relativ kleinem Zentrierdurchmesser. Hierzu wird ein auch als Auflageteller geeignetes Zentrierelement 329 verwendet, das auf seiner Oberseite ein hohlzylindrisches Zentriernest 330 aufweist, in welches der Rotor mit einem vorstehenden Zentrieransatz eingreift. Das Festspannen des Rotors erfolgt auch hier mit Hilfe eines Spanndeckels 335, dessen Spannschraube 336 sich durch eine zentrale Bohrung des Rotors erstreckt und in eine Gewindebohrung im Zentrierelement 329 eingreift. Auch hierbei kann das Zentrierelement 329 unmittelbar an dem Grundelement 2 oder, wenn die Rotorform es erfordert, durch Einfügen von Distanzelementen 324, 325 einen Abstand zum Grundelement 2 erhalten.

Figur 4 zeigt eine Anordnung 400, bei dem der Rotor auf den Auflageschienen 5 gelagert und mit Hilfe eines Zentrierelements 429 innen in einer Bohrung zentriert wird. Das Zentrierelement 429 wird hierbei mit Hilfe von Distanzelementen 424 und 425 in einem Abstand an dem Grundelement 2 befestigt, der gleich oder etwas größer ist als die Höhe der Auflageschienen 5. Die Drehmomentübertragung auf den Rotor erfolgt hierbei mit Hilfe von Spannstücken 20, die mit einer Spannschraube 21 und Nutensteinen 23 an den Auflageschienen 5 befestigt werden und in die ein Mitnehmerstift oder eine Schraube zur Übertragung des Drehmoment auf den Rotor eingesetzt wird.

Figur 5 zeigt eine Anordnung 500 zur Außen- oder Innenzentrierung eines Rotors mit vergleichsweise großem Zentrierdurchmesser. Das Grundelement 2 wird hierzu mit Auflageschienen 5 versehen, die mit Zentrierstücken 14 und Spannstücken 20 bestückt werden. Im Zentrum zwischen den Auflageschienen 5 kann in eine zentrale Bohrung des Grundelements 2 eine Zentrierlehre 50 eingesetzt werden, mit deren Hilfe eine genaue Einmessung der Radialposition der Zentrierelemente möglich ist. Die Befestigung der Auflageschienen 5 an dem Grundelement 2 erfolgt mit Hilfe von Schrauben 7 und Stiften 13, die für eine wiederholgenaue Positionierung der Auflageschienen 5 auf dem Grundelement 2 sorgen. Jede Auflageschiene 5 wird mit Hilfe von in Passbohrungen eingesetzten Stiften 13 positioniert.

Das beschriebene Vorrichtungssystem mit seinen verschiedenen Zentrier- und Lagerungsmöglichkeiten eignet sich besonders für Universalauswuchtmaschinen mit vertikaler Mittelachse, wenn kleinere Losgrößen von häufig wechselnden Rotorausführungen auszuwuchten sind. Die Genauigkeit der Vorrichtung ist ausreichend für die üblichen Anwendungen und ist größer als diejenige von Universalaufnahmen mit beispielsweise Dreibackenfutter. Durch den weiten Verstellbereich der Vorrichtung zur Außenzentrierung mit verstellbaren Zentrierstücken kann im Vergleich zu bekannten Lösungen eine deutlich größere Zahl von unterschiedlichen Rotorausführungen aufgenommen werden, wobei keine mechanische Bearbeitung zur Aufnahme der Rotoren in unterschiedlichen Zentrierdurchmessern erforderlich ist. Sowohl Innen- als auch Außenzentrierung ist möglich und durch formschlüssige Mittel zur Drehmomentübertragung ist eine größere Sicherheit bei Rotoren mit großem Massenträgheitsmoment gegeben.

## Patentansprüche

1. Vorrichtungssystem zur drehbaren Lagerung eines auszuwuchtenden Rotors in einer Auswuchtmaschine, umfassend folgende in Bezug auf eine Mittelachse (A) rotationssymmetrisch ausgebildete, mit Anschlussenden versehene Vorrichtungsteile:
ein Grundelement (2) mit einer Mittelachse (A), das dazu ausgebildet ist, um mit einer drehbaren Spindel einer dynamischen Auswuchtmaschine oder einer Aufnahmeachse einer statischen Auswuchtmaschine koaxial verbunden zu werden,
ein Zentrierelement (29; 229; 329; 429) für die Innenzentrierung eines auszuwuchtenden Rotors,
ein Distanzelement (24, 25; 224, 225; 324, 325; 424, 425) zur axialen Positionierung des Zentrierelements (29; 229; 329; 429),
einen Auflageteller (27; 227) und
einen Spanndeckel (35; 235; 335), **dadurch gekennzeichnet, dass** die Anschlussenden der Vorrichtungsteile mit Zentrier- und Verbindungsmitteln versehen sind, durch die die Vorrichtungsteile zueinander zentriert in verschiedenen Anordnungen zueinander drehfest aneinander befestigt werden können.

2. Vorrichtungssystem nach Anspruch 1, **dadurch gekennzeichnet, dass** die Vorrichtungsteile, hiervon ausgenommen der Spanndeckel (35; 235; 335), parallel zur Mittelachse und im gleichen Abstand von dieser und voneinander angeordnete Bohrungen aufweisen, die als Durchgangsbohrungen und/oder als mit Innengewinde versehene Bohrungen ausgebildet und zur Aufnahme von Verbindungsschrauben bestimmt sind.

3. Vorrichtungssystem nach einem der Ansprüche 1 oder 2, **gekennzeichnet durch** mehrere Zentrierelemente (29; 229; 329; 429) von verschiedenem Zentrierdurchmesser.

4. Vorrichtungssystem nach einem der vorhergehenden Ansprüche, **dadurch gekennzeichnet, dass** das Zentrierelement (29; 229; 329; 429) und der Auflageteller (27; 227) aus spanabhebend bearbeitbarem Material bestehen.

5. Vorrichtungssystem nach einem der vorhergehenden Ansprüche, **gekennzeichnet durch** mehrere Distanzelemente (24, 25; 224, 225; 324, 325; 424, 425) verschiedener Länge.

6. Vorrichtungssystem nach einem der vorhergehenden Ansprüche, **dadurch gekennzeichnet, dass** der Auflageteller oder ein Zentrierelement (329) auf einer Seite ein Zentriernest (330) aufweist.

7. Vorrichtungssystem nach einem der vorhergehenden Ansprüche, **dadurch gekennzeichnet, dass** das Distanzelement (24, 25) ein zylindrisches Mittelstück und an den Anschlussenden jeweils einen Flansch aufweist, wobei ein Flansch mit Durchgangsbohrungen und der andere Flansch in gleicher Zahl und Anordnung mit Gewindebohrungen versehen ist.

8. Vorrichtungssystem nach einem der vorhergehenden Ansprüche, **dadurch gekennzeichnet, dass** der Spanndeckel (35; 235; 335) einen Zentrierbund, eine zentrale Befestigungsbohrung und eine zugeordnete Spannschraube (36; 336) aufweist, wobei das Grundelement (2), das Zentrierelement (29; 229; 329; 429), das Distanzelement (24, 25; 224, 225; 324, 325; 424, 425) und/oder der Auflageteller (27; 227) mit einer zentralen Gewindebohrung zur Aufnahme der Spannschraube (36; 336) versehen sind.

9. Vorrichtungssystem nach einem der vorhergehenden Ansprüche, **gekennzeichnet durch** eine Vorrichtung mit verstellbaren Zentrierstücken (14) zur Innen- und/oder Außenzentrierung des auszuwuchtenden Rotors.

10. Vorrichtungssystem nach Anspruch 9, **gekennzeichnet durch** mehrere Auflageschienen (5), die an dem Grundelement (2) derart befestigbar sind, dass sie sich von der Mitte des Grundelements (2) nach außen erstrecken und in einer gemeinsamen Radialebene liegende Auflageflächen (10) haben, wobei an jeder Auflageschiene (5) ein Zentrierstück (14) für eine Innen- und/oder Außenzentrierung des Rotors angeordnet ist, das gegenüber der Auflageschiene (5) radial verstellbar und in einer beliebigen Zentrierstellung mit der Auflageschiene (5) fest verbindbar ist.

11. Vorrichtungssystem nach Anspruch 10, **dadurch gekennzeichnet, dass** an wenigstens einer Auflageschiene (5) ein Spannstück (20) für die Übertragung eines Drehmoments auf den Rotor angeordnet ist, das radial verstellbar und innerhalb seines Verstellbereiches in einer beliebigen Übertragungsstellung mit der Auflageschiene (5) fest verbindbar ist.

12. Vorrichtungssystem nach einem der Ansprüche 9 bis 11, **dadurch gekennzeichnet, dass** das Zentrierstück (14) eine konvex gekrümmte Anlagefläche (15, 16) für den Rotor aufweist, deren Krümmungsachse in mit dem Grundelement (2) verbundenen Stellungen parallel zur Mittelachse (A) des Grundelements (2) ausgerichtet ist.

13. Vorrichtungssystem nach einem der Ansprüche 10 bis 12, **dadurch gekennzeichnet, dass** die Auflageschiene (5) in der Auflagefläche (10) eine radial verlaufende erste Längsnut (8) aufweist und dass das Zentrierstück (14) mit einem als Nutenstein ausgebildeten ersten Abschnitt in die erste Längsnut (8) eingreift und mit einem zweiten Abschnitt aus der ersten Längsnut (8) herausragt.

14. Vorrichtungssystem nach Anspruch 13, **dadurch gekennzeichnet, dass** das Spannstück (20) ein in der ersten Längsnut (8) der Auflageschiene (5) angeordneter Nutenstein ist, der nicht aus der ersten Längsnut (8) herausragt und dass das Spannstück (20) eine Befestigungsbohrung (22) zur Aufnahme eines Mitnehmerbolzens oder einer Spannschraube aufweist..

15. Vorrichtungssystem nach einem der Ansprüche 10 bis 14, **dadurch gekennzeichnet, dass** die Auflageschiene (5) auf der der Auflagefläche (10) entgegengesetzten Seite eine zur ersten Längsnut (8) parallele zweite Längsnut (9) und einen die erste Längsnut (8) und die zweite Längsnut (9) miteinander verbindenden Längsschlitz (12) aufweist und dass in der zweiten Längsnut (9) wenigstens ein Nutenstein (23) angeordnet ist, der durch eine den Längsschlitz (12) durchdringende Spannschraube (19, 21) mit dem Zentrierstück (14) und/oder dem Spannstück (20) verbunden ist.

16. Vorrichtungssystem nach einem der Ansprüche 10 bis 15, **dadurch gekennzeichnet, dass** die radial inneren Enden der Auflageschienen (5) in einem Abstand von der Mittelachse (A) des Grundelements (2) an diesem befestigbar sind und dass das Grundelement (2) in der Mitte zwischen den inneren Enden befestigter Auflageschienen (5) Haltemittel zur Befestigung eines weiteren Elements (24) aufweist.

## Claims

1. A device assembly for rotatably supporting a rotor to be balanced in a balancing machine, comprising the following device components configured to be rotationally symmetrical relative to a central axis (A) and provided with mounting ends:
a base element (2) with a central axis (A) configured for coaxial connection to a rotary spindle of a dynamic balancing machine or a mounting axle of a static balancing machine;
a centering element (29; 229; 329; 429) for internal centering of a rotor to be balanced;
a spacer element (24, 25; 224, 225; 324, 325; 424, 425) for axially positioning the centering element (29; 229; 329; 429);
a support plate (27; 227); and
a clamp cover (35; 235; 335), **characterized in that** the mounting ends of the device components are provided with centering and connecting means enabling the device components to be centrally located relative to each other and to be secured to one another in a non-rotating relationship in a variety of arrangements.

2. The device assembly according to claim 1, **characterized in that** the device components, with the exception of the clamp cover (35; 235; 335), are provided with bores which are arranged parallel to the central axis and equally spaced apart therefrom and from each other, said bores being configured as through bores and/or as bores provided with an internal thread and adapted for receiving connecting screws.

3. The device assembly according to any one of the claims 1 or 2, **characterized by** a plurality of centering elements (29; 229; 329; 429) of varying centering diameters.

4. The device assembly according to any one of the preceding claims, **characterized in that** the centering element (29; 229; 329; 429) and the support plate (27; 227) are made of a machinable material.

5. The device assembly according to any one of the preceding claims, **characterized by** a plurality of spacer elements (24, 25; 224, 225; 324, 325; 424, 425) of varying lengths.

6. The device assembly according to any one of the preceding claims, **characterized in that** the support plate or a centering element (329) includes a centering nest (330) on one side.

7. The device assembly according to any one of the preceding claims, **characterized in that** the spacer element (24, 25) includes a cylindrical centerpiece and on each of its mounting ends a flange, with the one flange being provided with through bores and the other flange with tapped bores of like number and arrangement.

8. The device assembly according to any one of the preceding claims, **characterized in that** the clamp cover (35; 235; 335) includes a centering collar, a central mounting bore and an associated clamp screw (36; 336), wherein the base element (2), the centering element (29; 229; 329; 429), the spacer element (24, 25; 224, 225; 324, 325; 424, 425) and/or the support plate (27; 227) are provided with a central tapped bore for receiving the clamp screw (36; 336).

9. The device assembly according to any one of the preceding claims, **characterized by** a device having adjustable centering members (14) for internal and/or external centering of the rotor to be balanced.

10. The device assembly according to claim 9, **characterized by** a plurality of support rails (5) which are adapted for fastening to the base element (2) such as to extend outwardly from the center of the base element (2) and include seating surfaces (10) lying in a common radial plane, wherein each support rail (5) mounts a centering member (14) for an internal and/or external centering of the rotor, said centering member being radially adjustable relative to the support rail (5) and fixedly connectable to the support rail (5) in any centering position.

11. The device assembly according to claim 10, **characterized in that** at least one support rail (5) mounts a clamping member (20) for the transmission of a torque to the rotor, said clamping member being radially adjustable and fixedly connectable to the support rail (5) within its adjustment range in any position of transmission.

12. The device assembly according to any one of the claims 9 to 11, **characterized in that** the centering member (14) includes a convex abutment surface (15, 16) for the rotor, its axis of curvature being aligned parallel to the central axis (A) of the base element (2) in positions connected to the base element (2).

13. The device assembly according to any one of the claims 10 to 12, **characterized in that** the support rail (5) has in its seating surface (10) a radially extending first longitudinal groove (8), and that the centering member (14) engages the first longitudinal groove (8) with a first portion thereof formed as a slot stone and protrudes from the first longitudinal groove (8) with a second portion thereof.

14. The device assembly according to claim 13, **characterized in that** the clamping member (20) is a slot stone arranged in the first longitudinal groove (8) of the support rail (5) without protruding from the first longitudinal groove (8), and that the clamping member (20) includes a fastening bore (22) for receiving a driver pin or a clamp screw.

15. The device assembly according to any one of the claims 10 to 14, **characterized in that** the support rail (5) includes on the side opposite the seating surface (10) a second longitudinal groove (9) parallel to the first longitudinal groove (8) and a longitudinal slot (12) connecting the first longitudinal groove (8) with the second longitudinal groove (9), and that the second longitudinal groove (9) receives at least one slot stone (23) connected to the centering member (14) and/or the clamping member (20) by means of a clamp screw (19, 21) extending through the longitudinal slot (12).

16. The device assembly according to any one of the claims 10 to 15, **characterized in that** the radially inner ends of the support rails (5) are adapted for fastening to the base element (2) at a distance relative to the base element's central axis (A), and that the base element (2) includes midway between the inner ends of fastened support rails (5) holding means for fastening a further element (24).

## Revendications

1. Dispositif pour le logement libre en rotation d'un rotor à équilibrer dans un banc d'équilibrage, comprenant les éléments de dispositif suivants conçus de façon symétrique en rotation par rapport à un axe médian (A) et dotés d'extrémités de raccordement :
un élément de base (2) comportant un axe médian (A) conçu pour être relié de façon coaxiale à une broche rotative d'un banc d'équilibrage dynamique ou à un axe récepteur d'un banc d'équilibrage statique,
un élément de centrage (29 ; 229 ; 329 ; 429) pour le centrage interne d'un rotor à équilibrer,
un élément d'espacement (24, 25 ; 224, 225 ; 324, 325 ; 424, 425) pour le positionnement axial de l'élément de centrage (29 ; 229 ; 329 : 429),
un disque de réception (27 ; 227) et
un couvercle de serrage (35 ; 235 ; 335), **caractérisé en ce que** les extrémités de raccordement des éléments de dispositif sont dotées de moyens de centrage et de liaison au moyen desquels les éléments de dispositif peuvent être fixés les uns aux autres bloqués en rotation les uns par rapport aux autres dans différentes dispositions et centrés les uns par rapport aux autres,

2. Dispositif selon la revendication 1, **caractérisé en ce que** les éléments dz dispositif, à l'exception des couvercles de serrage (35 ; 235 ; 335), présentent des d'alésages disposés parallèlement à l'axe médian et à égale distance de celui-ci ainsi qu'à égale distance les uns des autres, lesquels alésages sont conçus comme des alésages traversants et/ou comme des alésages dotés d'un taraudage interne et sont destinés à recevoir des vis de liaison.

3. Dispositif selon l'une des revendications 1 ou 2, **caractérisé par** plusieurs éléments de centrage (29 ; 229 ; 329 ; 429) de diamètre de centrage différent.

4. Dispositif selon l'une des revendications précédentes, **caractérisé en ce que** l'élément de centrage (29 ; 229 ; 329 ; 429) et le disque de réception (27 ; 227) sont constitués d'une matière pouvant être usinée par enlèvement de copeaux.

5. Dispositif selon l'une des revendications précédentes, **caractérisé par** plusieurs éléments d'espacement (24, 25 ; 224, 225 ; 324, 325 ; 424, 425) de différentes longueurs.

6. Dispositif selon l'une des revendications précédentes, **caractérisé en ce que** le disque de réception ou un élément de centrage (329) présente un creux de centrage (330) sur un côté.

7. Dispositif selon l'une des revendications précédentes, **caractérisé en ce que** l'élément d'espacement (24, 25) présente une pièce médiane cylindrique et une bride sur chaque extrémité de raccordement, l'une des brides étant dotée d'alésages traversants et l'autre bride d'un même nombre d'alésages filetés disposés de la même façon.

8. Dispositif selon l'une des revendications précédentes, **caractérisé en ce que** le couvercle de serrage (35 ; 235 ; 335) présente une collerette de centrage, un alésage de fixation central et une vis de serrage qui lui est affectée (36 ; 336), l'élément de base (2), l'élément de centrage (29 ; 229 ; 329 ; 429), l'élément d'espacement (24, 25; 224, 225 ; 324, 325 ; 424, 425) et/ou le disque de réception (27 ; 227) étant dotés d'un alésage fileté central prévu pour recevoir la vis de serrage (36 ; 336).

9. Dispositif selon l'une des revendications précédentes, **caractérisé par** un dispositif comportant des pièces de centrage (14) réglables prévues pour le centrage intérieur et/ou extérieur du rotor à équilibrer.

10. Dispositif selon la revendication 9, **caractérisé par** plusieurs rails de réception (5) pouvant être fixés sur l'élément de base (2) de telle sorte qu'ils s'étendent depuis le milieu de l'élément de base (2) vers l'extérieur et possèdent des surfaces d'appui (10) situées sur un plan radial commun, une pièce de centrage (14) prévue pour un centrage intérieur et/ou extérieur du rotor étant disposée sur chaque rail de réception (5), laquelle pièce de centrage peut être déplacée radialement par rapport au rail de réception (5) et reliée fixement au rail de réception (5) dans n'importe quelle position de centrage.

11. Dispositif selon la revendication 10, **caractérisé en ce qu**'une pièce de serrage (20) est disposée sur au moins un rail de réception (5) pour la transmission d'un couple de rotation au rotor, laquelle pièce de serrage est réglable radialement et peut être reliée fixement au rail de réception (5) dans sa plage de réglage dans une quelconque position de transmission.

12. Dispositif selon l'une des revendications 9 à 11, **caractérisé en ce que** la pièce de centrage (14) présente une face de butée cintrée de façon convexe (15, 16) pour le rotor, dont l'axe de courbure est orienté parallèlement à l'axe médian (A) de l'élément de base (2) dans des positions reliées â l'élément de base (2).

13. Dispositif selon l'une des revendications 10 à 12, **caractérisé en ce que** le rail de réception (5) présente, dans la face de butée (10), une première rainure (8) longitudinale s'étendant radialement et **en ce que** la pièce de centrage (14) s'engrène avec un premier tronçon en forme de coulisseau dans la première rainure longitudinale (8) et dépasse hors de la première rainure longitudinale (8) avec un deuxième tronçon.

14. Dispositif selon la revendication 13, **caractérisé en ce que** la pièce de serrage (20) est un coulisseau disposé dans la première rainure longitudinale (8) du rail de réception (5), lequel coulisseau ne dépasse pas hors de la première rainure longitudinale (8) et **en ce que** la pièce de serrage (20) présente un alésage de fixation (22) prévu pour recevoir une broche d'entraînement ou une vis de serrage.

15. Dispositif selon l'une des revendications 10 à 14, **caractérisé en ce que** le rail de réception (5) présente, sur le côté opposé à la face de butée (10), une deuxième rainure longitudinale (9) parallèle à la première rainure longitudinale (8) et une fente longitudinale (12) reliant entre elles la première rainure longitudinale (8) et la deuxième rainure longitudinale (9), et **en ce qu'**au moins un coulisseau (23) est disposé dans la deuxième rainure longitudinale (9), lequel coulisseau est relié à la pièce de centrage (14) et/ou à la pièce de serrage (20) par une vis de serrage (19, 21) traversant la fente longitudinale (12).

16. Dispositif selon l'une des revendications 10 à 15, **caractérisé en ce que** les extrémités radialement intérieures des rails de réception (5) peuvent être fixées sur l'élément de base (2) à une certaine distance de l'axe médian (A) de celui-ci, et **en ce que** l'élément de base (2) présente des moyens de retenue au milieu entre les extrémités intérieures de rails de réception (5) fixés afin de fixer un autre élément (24).
